# FASCICULE DE BREVET EUROPEEN

(11) **EP 2 366 284 B1**
(45) Date de publication et mention de la délivrance du brevet: **31.08.2016**
(21) Numéro de dépôt: 11290121.0
(22) Date de dépôt: 10.03.2011
(51) Int. Cl.: A01K 1/06

(54) **Dispositif anti-bruit pour barrière à cornadis**
Lärmdämmungsvorrichtung für Fressgitter-Schranke
Anti-noise device for barrier with feeding rack

(30) Priorité: 18.03.2010 FR 1001073
(43) Date de publication de la demande: 21.09.2011
(73) Titulaire: Jourdain S.A., 45300 Escrennes (FR)
(72) Inventeur: Jourdain, Martial Dominique Didier, 45300 Escrennes (FR)
(74) Mandataire: Eidelsberg, Olivier Nathan

(56) Documents cités:
- EP-A1- 0 838 151
- EP-A1- 0 895 714
- KR-B1- 100 789 927

## Description

La présente invention est relative à un dispositif anti-bruit pour barrières à cornadis.

Dans sa forme la plus simple un cornadis est constitué par une succession d'ouvertures, délimitées, chacune, par un longeron supérieur, un longeron inférieur, un montant vertical et par un bras pivotant.

D'une façon générale, le bras pivotant peut délimiter, selon sa position, trois types d'ouverture : une ouverture triangulaire « pointe en bas », une ouverture « pointe en haut » et une ouverture où le bras est sensiblement vertical pour délimiter une ouverture retreinte permettant d'entraver l'animal par l'encolure.

La barrière étant métallique et comportant des éléments mobiles dont le pivotement peut être brusque, le phénomène « bruit » est particulièrement important.

Dans le document EP895714, on avait décrit un dispositif qui, outre sa fonction de rappeler, automatiquement, le bras pivotant dans sa position « ouverture pointe en bas », avait l'avantage d'amortir le bruit résultant du choc de la partie inférieure du bras contre la partie inférieure du montant de support de ce dernier.

Ce dispositif était constitué, essentiellement, par une masse de caoutchouc, ou analogue, disposée en dessous de l'axe d'articulation du bras et fixée sans l'aide d'outil.

Il ressort des explications du document précité que, outre le fait que le dispositif pouvait être mis en place sans l'aide d'outil, il pouvait aussi être monté sur des barrières existantes.

L'expérience a montré, toutefois, que le bruit résultant du choc de la partie supérieure du bras contre celle supérieure du montant correspondant, ou de l'organe supportant l'axe d'articulation, nécessitait l'utilisation de dispositifs amortisseurs distincts.

Les documents KR-B1-100789927 et EP-A1-0838151 divulguent des dispositifs qui amortissent le bruit de la partie supérieur.

Le but de la présente invention est de proposer un dispositif permettant, à la fois, de remplir les fonctions décrites dans le document EP 895714 et d'obvier aux inconvénients cités ci-dessus.

Le dispositif de l'invention comme défini dans la revendication 1 se caractérise par une pièce unique, en caoutchouc ou analogue, comportant une première masse disposée en dessous de l'axe d'articulation du bras, un moyen de fixation et une seconde masse s'étendant au-delà dudit axe et s'interposant entre ledit bras et l'organe le supportant.

L'invention sera mieux comprise par la description qui va suivre faite en se référant aux dessins annexés à titre d'exemple indicatif seulement sur lesquels :
- la figure 1 montre en élévation une barrière à cornadis d'un type connu ;
- la figure 2 est une vue à plus grande échelle du détail A de la figure 1 illustrant l'état de la technique connue par le document EP 895714 ;
- la figure 3 est une vue en perspective du dispositif de l'invention ;
- la figure 4 est une vue en coupe verticale du dispositif de l'invention ;

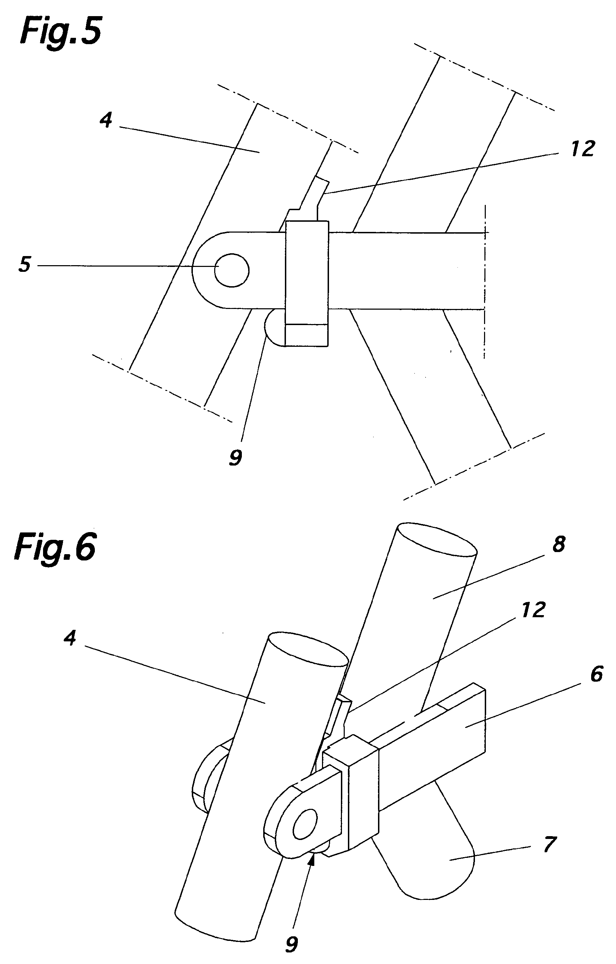

- la figure 5 est une vue analogue à celle 2, montrant l'utilisation du dispositif de l'invention ;
- la figure 6 est une vue en perspective de la figure 5.
- la figure 7 est une section effectuée selon la ligne VII-VII de la figure 4, montrant une variante de réalisation.

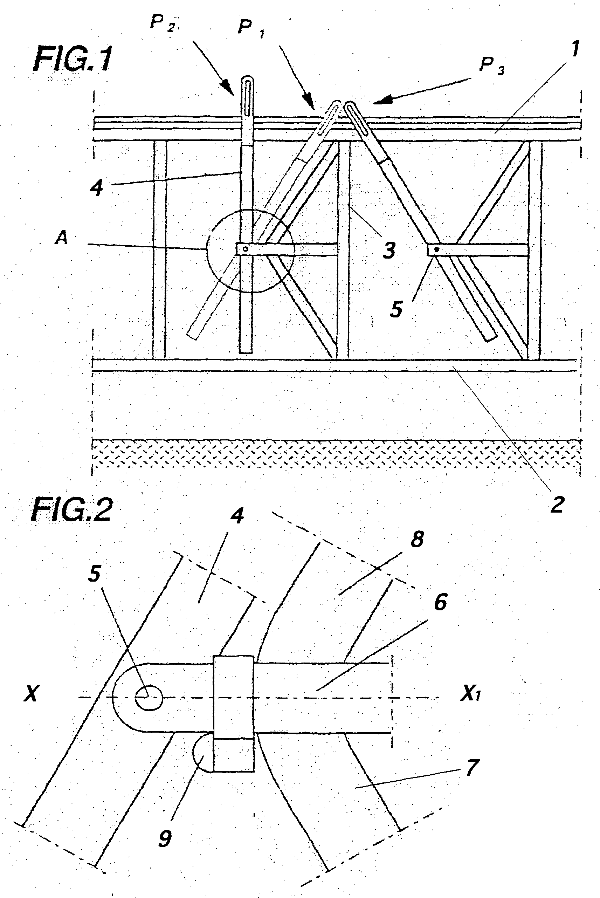

En se reportant à la figure 1, on voit qu'une barrière à cornadis comporte deux longerons 1 et 2 réunis par des montants 3 définissant en coopération avec des bras pivotants 4 des ouvertures diverses selon la position desdits bras.

En P₁, le bras est en position « ouverture pointe en bas », en P₂ il est dans la position « animal entravé » et en P₃ il est dans la position « ouverture pointe en haut », c'est la position qui permet à l'animal de se dégager s'il s'est effondré. La barrière est complétée par des moyens, non représentés, pour maintenir le bras verrouillé dans la position P₂.

De la façon connue, le bras 4 est articulé, par l'entremise d'un axe 5 entre les ailes 6 d'une chape portée par le montant correspondant coopérant, par exemple, avec par des renforts 7 et 8.

Sous la chape est disposée une première masse 9 de caoutchouc ou analogue, cette masse a principalement pour fonction de renvoyer le bras 4 de la position P₃ à celle P₁, mais elle empêche aussi les heurts intempestifs, parce que générateurs de bruits, entre la partie inférieure dudit bras et celle correspondant du renfort 7.

De la façon connue, la masse 9 forme la partie médiane d'un étrier dont les branches 10 présentent des ouvertures 11 permettant de monter ledit étrier sur les ailes 6 de la chape d'articulation du bras, préalablement à la mise en place de ce dernier.

Si XX₁ est l'axe horizontal passant par l'axe 5 d'articulation du bras, on voit que la masse 9 est disposée en dessous de cet axe.

Selon l'invention, une seconde masse 12, absorbant le bruit, est rendue solidaire du support de la masse 9.

Cette masse, formant un coussin anti-bruit, est disposée au-dessus de l'axe XX₁.

L'épaisseur de cette masse est judicieusement déterminée de façon à ne pas emmagasiner de force lors de l'impact, sa fonction étant, simplement, d'éviter que la partie supérieure du bras ne rencontre une partie métallique et engendre du bruit.

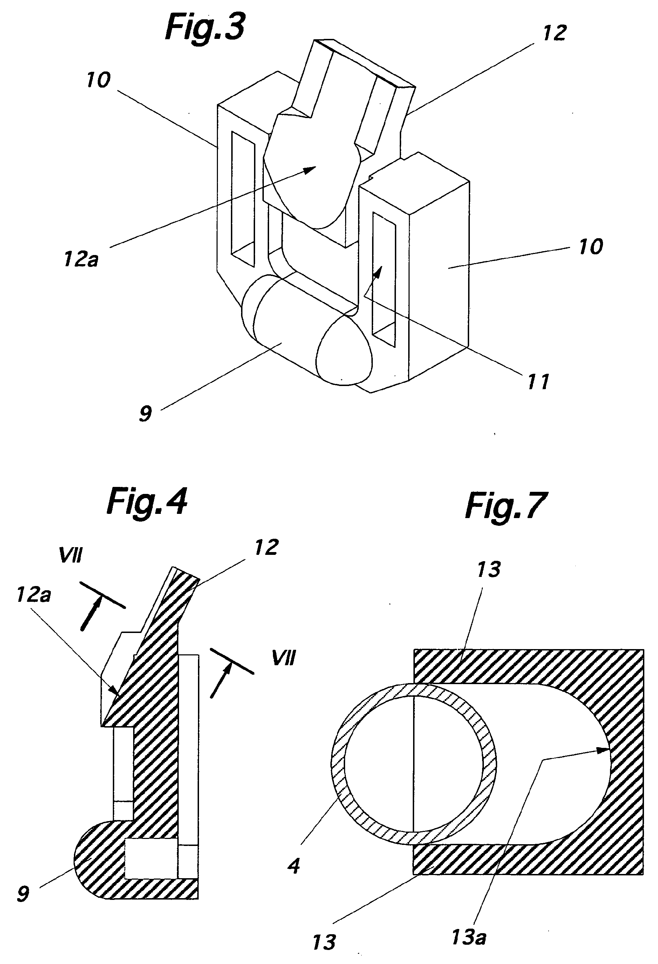

Comme cela ressort de la figure 3, notamment, la masse 12 réunie les parties supérieures des ailes 10.

La face 12a, qui constitue la zone de rencontre entre le bras 4 et la masse 12, épouse sensiblement le profil dudit bras.

L'invention prévoit des moyens pour éviter un phénomène de rebond lors de la rencontre de la masse 12 et du bras.

Selon le mode de réalisation de la figure 7, la zone 12a se présente sous la forme d'une gouttière dont les branches 13 ménagent entre elles un espace au plus égal au diamètre du bras 4.

De cette façon, en fin de course, on freine le mouvement du bras et on évite un rebond lors de sa rencontre avec le fond 13a de la gouttière.

## Revendications

1. Dispositif anti-bruit pour barrière à cornadis comportant, une succession d'ouvertures délimitées, chacune, par un longeron supérieur (1), un longeron inférieur (2) un montant (3) et un bras pivotant (4) articulé entre les ailes (6) d'une chape portée par le montant (3) correspondant et comportant deux masses (9 et 12 ) en caoutchouc ou analogue disposées de part et d'autre de l'axe d'articulation (5) du bras pivotant (4) , **caractérisé en ce que** la première masse (9) forme la partie médiane d'un étrier dont les branches (10) présentent des ouvertures (11) permettant de monter ledit étrier sur les dites ailes (6) et **en ce que** la seconde masse (12) est disposée entre lesdites branches (10)

2. Dispositif selon la revendication 1, **caractérisé en ce que** une face (12a) de la seconde masse (12) se présente sous la forme d'une gouttière, dont les branches (13) ménagent entre elles un espace au plus égal au diamètre du bras articulé (4)

## Patentansprüche

1. Lärmschutzvorrichtung für eine Fressgitterbarriere, umfassend eine Folge von Öffnungen, die jeweils durch einen oberen Längsträger (1), einen unteren Längsträger (2), einen Pfosten (3) und einen Schwenkarm (4) begrenzt sind, der zwischen den Flügeln (6) einer Gabel angelenkt ist, die durch den entsprechenden Pfosten (3) getragen ist und zwei Massen (9 und 12) aus Gummi oder ähnlichem umfasst, welche auf beiden Seiten der Gelenkachse (5) des Schwenkarms (4) angeordnet sind, **dadurch gekennzeichnet, dass** die erste Masse (9) den Mittelteil eines Bügels bildet, dessen Schenkel (10) Öffnungen (11) aufweisen, welche das Anbringen des Bügels an den Flügeln (6) ermöglichen, und dass die zweite Masse (12) zwischen den Schenkeln (10) angeordnet ist.

2. Vorrichtung nach Anspruch 1, **dadurch gekennzeichnet, dass** eine Seite (12a) der zweiten Masse (12) in Form einer Rinne vorliegt, deren Schenkel (13) zwischen sich einen Raum aussparen, der höchstens gleich dem Durchmesser des angelenkten Arms (4) ist.

## Claims

1. An anti-noise device for a barrier with a feeding rack comprising a series of openings, each delimited by an upper side rail (1), a lower side rail (2), an upright (3) and a pivoting arm (4) articulated between the wings (6) of a clevis supported by the corresponding upright (3) and comprising two masses (9 and 12) in rubber or the like disposed on either side of the articulation axis (5) of the pivoting arm (4), **characterised in that** the first mass (9) forms the central part of a stirrup, the arms (10) of which exhibit openings (11) that make it possible to mount said stirrup on said wings (6), and **in that** the second mass (12) is disposed between said arms (10).

2. The device according to Claim 1, **characterised in that** one face (12a) of the second mass (12) is in the form of a gutter, the branches (13) of which form between them a space that is at most equal to the diameter of the articulated arm (4).
